# EUROPEAN PATENT SPECIFICATION

(11) **EP 1 278 627 B1**
(45) Date of publication and mention of the grant of the patent: **09.11.2005**
(21) Application number: 01922210.8
(22) Date of filing: 17.04.2001
(51) Int. Cl.: B29C 71/02, B29C 33/02

(54) **DEVICE AND METHOD FOR THERMAL TREATMENT AT A CASTING PROCESS**
VORRICHTUNG UND VERFAHREN ZUR WÄRMEBEHANDLUNG BEI EINEM GIESSVERFAHREN
APPAREIL ET PROCEDE DE REFROIDISSEMENT DANS UN PROCEDE DE COULEE

(30) Priority: 13.04.2000 SE 0001388
(43) Date of publication of application: 29.01.2003
(73) Proprietor: Cool Tool Holding AB, 721 30 Västeras (SE)
(72) Inventor: WENNBERG, Mikael, S- 722 17 Västeras (SE)
(74) Representative: Reyier, Ann-Mari
(86) International application number: PCT/SE2001/000844
(87) International publication number: WO 2001/078970

(56) References cited:
- US-A- 4 205 950
- US-A- 4 376 090
- US-A- 4 439 123
- US-A- 5 578 263

## Description

### FIELD OF THE INVENTION

The present invention relates to a method and a device for thermal treatment at a casting process, wherein objects are formed in a casting machine which comprise a divisible forming tool with a casting space enclosed therein, designed to be filled by a liquid casting material. The casting material can, for example, consist of plastics, light metals, metals, or noble metals.

### Technical background of the invention

At casting processes, objects are formed in a casting machine by adding liquid casting material to a forming tool comprising a casting space, the shape of which corresponds to the shape of the object. The forming tool usually consists of two halves, wherein one side is movable and the other is fixed. The forming tool is usually equipped with cooling members such as cooling flanges or cooling channels. The object is kept in the forming tool until it has cooled sufficiently in order to, for example, be transported on a conveyor belt and still keep its shape. When the object is sufficiently cooled to allow further treatment, the forming tool is opened by moving the movable side to the side and the object is picked out of the casting machine. Thereafter, the next object can be cast.

The time it takes to cast an object is called the cycle time, and the cycle time determines the number of objects that can be produced per time unit. At casting processes producing large volumes, short cycle times are important in order to produce as much as possible. To force the cycle times down has shown to be hard dependent on certain physical obstacles, such as the fact that the forming tool must reach a certain temperature before the casting material can be added to the forming tool and that the object must be cooled in the forming tool in order to keep its exact shape. If the object is moved too early from the forming tool, there is a risk for skewness and dimensional deviations. The cycle time has been decreased by optimizing the time for opening, closing, cooling, and filling. An essential part of the cycle time is constituted by the time for cooling the object, the cooling time, which has as its only purpose to secure the objects dimensional accuracy and quality. In certain casting processes, the cooling time can be up to 70-80% of the total cycle time.

US4205950 discloses a method and a device for thermal treatment at a casting process, according to the closest state of the art. The document shows an injection-moulding machine having three workstations, one moulding station for injection of molten material into the casting space, and two cooling stations. The machine comprises a divisible forming tool having one upper mould half and two lower mould halves, and two treatment tools for cooling the object. When the object is form stable the upper mould half of the moulding tool is removed, and the object is transported in the lower half of the moulding tool to one of the cooling stations, where the treatment tool is on top of the lower half of the forming tool and the object is cooled while it remains in the lower half of the forming tool. A disadvantage with the device and method disclosed is that it requires at least one additional mould half, which is expensive to produce.

### SUMMARY OF THE INVENTION

The purpose of the present invention is to obtain a device and a method that shortens the cycle time during a casting process, wherein the number of produced objects per time unit can be increased. Especially, a device for thermal treatment is desired which is useful in connection with the casting process, and which allows for co-operation with a casting machine.

Therefore a device and a method according to claims 1 and 14 is proposed.

By transporting the object from the forming tool to a treatment tool, which comprises a treatment surface, the shape of which at least in some parts imitates the casting space and is arranged outside the casting machine, some of the time for cooling can take place outside the casting machine, which means that the cycle time is shortened. This means that one or several objects can be cooled at the same time as a new object is cast in the casting machine.

When the object is cooled it shrinks and thus its form is changed. The object is transported to the treatment tool as soon as the object is essentially form-stable, that is when at least the outer layer of the object is form-stable. On this occasion, the interior of the object does not need to be congealed; hence its shape is not yet entirely stable and further shrinkage may take place. Such a shrinkage can advantageously take place while the object is in the treatment tool. Depending on the shape of the object, the treatment tool needs to completely or only partly imitate the casting space. For a less complicated shape, it may be sufficient that the treatment tool imitates the casting space in one or some chosen parts. It may also be sufficient to imitate one side of the forming tool, for example the movable side, or some sections of one side. A forming tool must have a very high precision in its dimensions and is therefore very expensive to produce. The shape of the treatment tool does not need to have such a high precision as the forming tool thanks to the fact that the object is form-stable when it is moved to the treatment tool and therefore the treatment tool is much less expensive to produce. Also, high pressures during casting processes are common, which require forceful dimensioning, especially during, for example, injection-moulding. In order to fill the casting space as quickly as possible, a very high pressure must be applied on the highly viscous melt. If one is then to achieve a good form rendering of the object, one must compensate for the increase in volume that the casting material gets when going form a liquid to a solid state at the temperature at which the casting tool is to be opened. Consequently, the necessary high pressures cause the forming tools to be very expensive, which puts high demands on large series of production.

The treatment tool is best accomplished in a thermally conducting material such as a metal, for example aluminium, magnesium, or steel. Other possible materials are metallized plastic, for example plastic with metal coatings, or thermally conductive plastics, i.e. plastics with admixtures of metals, for improvement of the thermal properties. If the treatment tool is accomplished in a thermally conducting, massive material, thermal treatment can imply that the object is held for some time in the treatment tool, wherein the heat is led away through the thermal material. In order to accelerate the cooling and to achieve a controlled temperature, the treatment tool can be equipped with cooling members, for example cooling flanges for conduction of heat or the channels with a cooling medium mentioned above.

In one embodiment of the invention, the treatment tool comprises one or several channels arranged to conduct a medium, with the purpose to add or to remove energy of heat. The temperature of the medium determines whether the object will be cooled or heated. The treatment tool can in such a way be used both for cooling and heating of the object. In certain cases, it is also necessary to heat the treatment tool before the hot object is transported to the treatment tool in order to decrease its temperature differences and thereby prevent cracking. The channels can be internal or be located on the outside and the transported medium can be a liquid, a gas or air. In one embodiment of the invention, the treatment tool comprises a number of channels arranged to conduct mediums with different temperatures between themselves. The purpose of having different channels comprising mediums with different temperatures is that in certain applications one wants to have different cooling processes in different parts of the object. For example, when different parts of the object have different material thicknesses, the thinner parts cool quicker than the thicker parts, which might lead to unwanted material changes, such as cracking. By cooling more on the thicker parts than on the thinner parts, the same cooling rate is achieved in the whole object. Thanks to these channels and mediums therein, one can control the thermal treatment effect, and in such a way possibilities are created to control the inner tensions.

During manufacturing of large series, the process must be automated. In one embodiment of the invention it comprises a handling member arranged to transport the object from the forming tool to the treatment tool. The handling member can, for example, be a robot, a portal robot, or a machine comprising a movable arm. In one embodiment, the treatment tool is fixedly arranged outside the casting machine. The object is fetched from the forming tool by the handling member and transported and delivered to the treatment tool for cooling or heating of the object.

In one preferred embodiment, the handling member is exchangeably connected to the treatment tool. This means that the treatment tool accompanies the handling member when the object is fetched from the forming tool, and that the object is transported directly from the forming tool to the treatment tool. The handling member carries the treatment tool during the thermal treatment as well. One advantage with the object being transported in the treatment tool, which is shaped corresponding to the object, is that in such a way a very well defined position of the object is obtained, which makes possible and facilitates continuous automatic handling of the object. For example, if the object in a next step of a process is to be fitted very exactly with another object, it is important that its position is well defined.

In one embodiment, the treatment tool comprises connection means to connect the object to the treatment tool in order to pull the object out of the casting space and further to prevent the object from falling out of the treatment tool during the transportation from the forming tool. In one preferred embodiment of the invention, the connection of the object to the treatment tool is carried out by underpressure. Such an underpressure can, for example, be achieved with sucking cups or cavities which have been evacuated of air. The connection can also be carried out by a seizing tool, for example seizing fingers, or by adhesion, for example glue or tape.

In one embodiment of the invention, the treatment tool comprises means arranged on the treatment surface in order to adjust for changes in shape of the object in connection to the thermal treatment. When the object is cooled in the treatment tool, there is a certain change in shape of the object due to shrinkage. In order to keep a good contact surface between the object and the treatment tool despite the shrinkage, the treatment tool is equipped with means which follow the shrinkage. Suitably, the means can be elastic, such as some plastic.

Sometimes, the demand for dimensional accuracy is high for certain sections of the object in the same time as the demand is low for other sections of the object. There are also objects which are very elongated or lanky and therefore needs to be fixed. In one embodiment of the invention, the treatment tool comprises means to fix at least some parts of the object during the thermal treatment. These means has as their task to fix and secure the dimensional accuracy of chosen parts of the object. The fixation can also be needed during the transportation away from the forming tool.

In certain applications, the time that the object needs to remain in the treatment tool is longer than the cycle time for the casting. If the treatment tool comprises two or several treatment surfaces, several objects may be cooled at the same time. Then, a new object can be collected at the same time as one or several objects cast earlier are cooled.

According to another embodiment of the invention, it comprises a palette comprising a number of treatment spaces and is arranged to treat several objects at the same time as an existing external casting machine forms new objects. This palette can be arranged rotateable, such as a revolver, wherein the handling member transports form-stable objects to these treatment spaces.

According to another embodiment of the invention, the thermal treatment relates to cooling of injection-moulding plastic details. A traditional forming tool of a injection-moulding machine contains cooling channels, which are intended to conduct cooling liquid, which cools the plastic melt in the forming tool. When an object with, for example, a rectangular shape is to be created with a rectangular hole extending through it, the corresponding forming tool is filled through an inlet, wherein the melt streams along the walls of the form. Thus the melt will meet at the opposite side of the inlet to be joined together. This joint is a weak point in regard of strength, since the temperature has sunk when the melt meets from its respective directions. As a positive result from this embodiment, which handles an essential part of the cooling time outside the injection-moulding machine, possibilities are created to heat the forming tool, and in such a way said joining is facilitated.

When a melt in general is cooled to a solid state relatively quickly, inner tensions occur. Inner tensions of the type thermal tensions can distort the object or even bring about cracking. These tensions will always be found in the product, if the cooling does not take place very slowly, which usually until now was not economically justified, since the present invention does not show the disadvantage that the thermal treatment takes place on behalf of the cycle time of the casting process.

A device and a method according to the invention is essentially useful during an injection-moulding process, wherein the object is formed by letting liquid plastic material into the casting space, whereafter the cooling takes place outside the casting space after partial solidification of the formed object.

### BRIEF DESCRIPTION OF THE DRAWINGS

The device and the method according to the invention will hereafter be described with support from the appended drawings.
- Fig. 1: shows a treatment tool for thermal treatment of objects.
- Figs. 2a-2c: show a method for thermal treatment of objects with a device according to the invention.
- Fig. 3a: shows an object formed by a casting machine.
- Fig. 3b: shows a treatment tool with means to fix chosen parts of the object during the thermal treatment.

### DETAILED DESCRIPTION OF PREFERRED EMBODIMENTS OF THE INVENTION

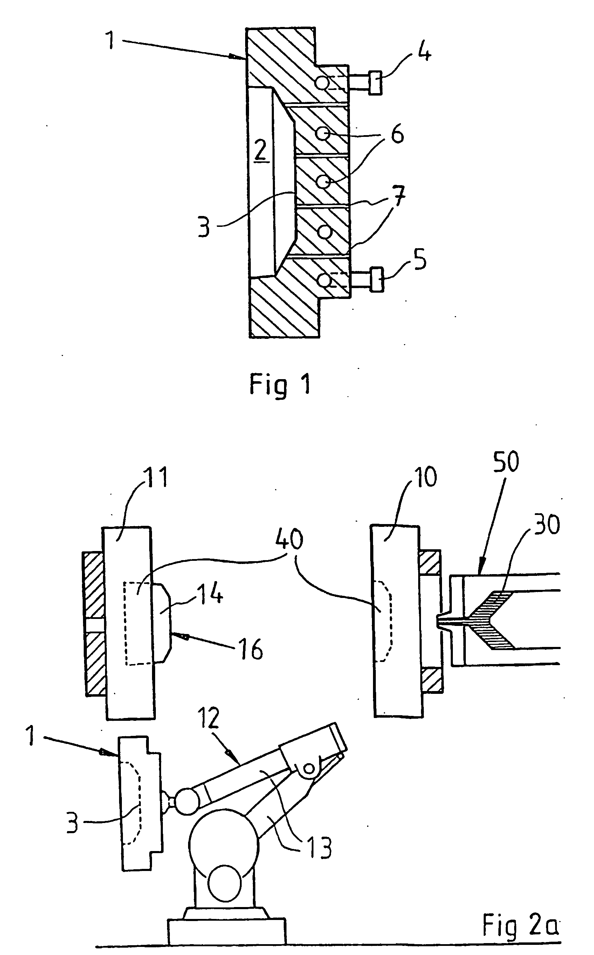

Figure 1 shows a treatment tool 1 for cooling of an object at a casting process. The treatment tool comprises a space 2, the surface 3 of which constitutes a contact surface against the object during the cooling and the contact surface is shaped according to the shape of the object. The surface 3 which, during the cooling, is in contact with the object is hereafter called the treatment surface 3. The shape of the treatment surface 3 is determined by the shape of the object which is to be cast. If the present object is, for example, a bowl, the treatment tool will comprise a protruding part, the surface of which constitutes a treatment surface. On the treatment tool there is an inlet member 4 and an outlet member 5 for cooling mediums, and a number of cooling channels 6 for transport of the cooling medium.

Further, the treatment tool 1 comprises a number of connecting channels 7, which lead to a treatment surface 3 and are arranged so that they can be emptied of air, so that there will be an underpressure in the channels. The connecting channels 7 constitutes connecting means and have as their task to connect the object to the treatment tool 1 and then to hold the object. The object connects to the treatment surface by suction when the connecting channels are emptied on air and is then held against the treatment surface 3 as long as there is an underpressure in the channels.

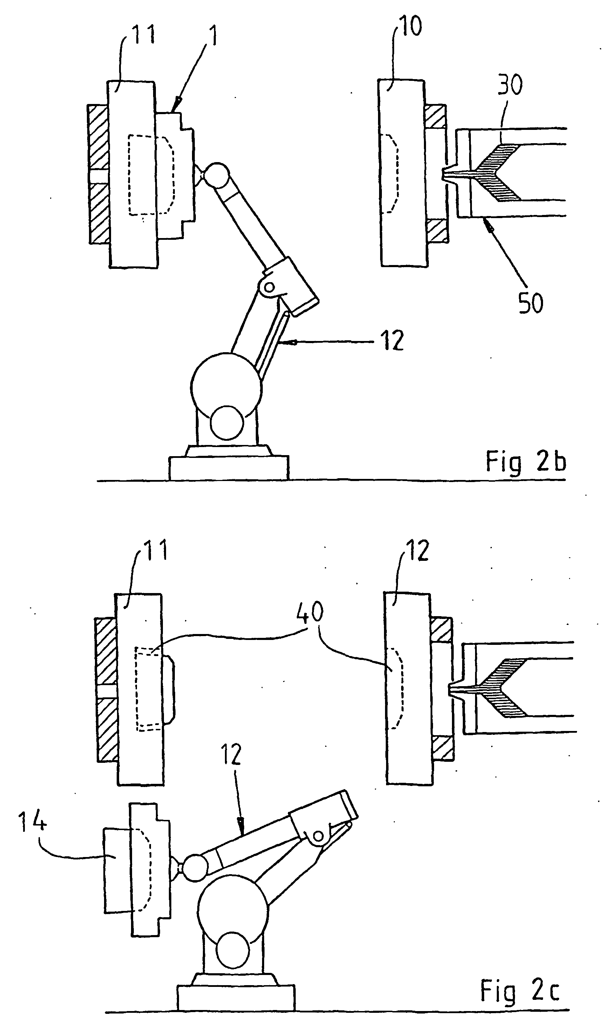

The figures 2a-2c show how a method according to the invention can be used during an injection-moulding process in which plastic objects are produced. The casting machine 50 comprises a forming tool, which in the embodiment example consists of two parts, a fixed part 10, and a movable part 11. The treatment tool 1 is carried by a handling member 12, which in this embodiment example is a six-axis robot. The robot comprises arms 13 which are rotatably arranged in relation to each other. When the forming tool is closed and fixed, liquid plastic material 30 is pressed into the forming tool. Cooling takes place in the forming tool until at least the outer layer of the object 14 is essentially form-stable, i.e. until the object 14 is as stable that it allows a transportation to the treatment tool 1. When the object 14 has such a form-stability, the forming tool is opened, see figure 2a. The treatment tool 1 is transported by the robot to one part of the forming tool, for example its movable part 11, where the object 14 is situated, see figure 2b, and is docked with the object so that the surface of the object 16 bears against the treatment surface 3. When the surfaces are fitted to each other, the connecting channels 7 are emptied on air and the object is connected to the treatment surface 3. Thereafter, the robot transports the treatment tool 1 with the object 14 away from the forming tool (10, 11) to a suitable place outside the casting machine 50, see figure 2c. The robot stays there and holds the treatment tool 1 for some time, while the object 14 is cooled. The side of the object 14 which bears against the treatment tool 1 is cooled by the treatment tool and the side facing away from the treatment tool 1 is cooled by the surrounding air. When the object 14 has reached the intended temperature, i.e. when its shape is sufficiently stable to withstand further treatment, the object 14 is delivered by the handling member 12 to, for example, a conveyor belt.

During the casting process, the casting material 30 passes from a melted phase into a solid material. In regard of the strength it is desirable that the melt is cooled slowly into a solid shape in order to minimize the growth of inner tensions and the risk for cracking. On the other hand, it is desirable that the melt is cooled relatively quick in order to minimize the time length of the forming cycle.

Three phases of the casting process can be distinguished. In a first phase, the casting material 30 is a liquid melt, i.e. when a casting space 40 of the forming tool 10, 11 is filled with casting material 30. The melt will first congeal close to the colder wall portions of the forming tool 10, 11. When this happens, however, the inner parts are still melted. This means a second phase of the forming process where the outer layer of the formed casting material is congealed and its interior is a viscous melt. When the outer layer congeals, it will contract to a certain degree. As a consequence of this, tensile stress will appear in the outer layer, since it strives to contract more than the interior of the casting material. At this second phase, the outer layer is essentially form-stable; hence the formed casting material is transported to the device according to the invention for further thermal treatment. A third phase of the forming process commences after a certain period of time, when the interior parts of the formed casting material also congeal and wants to contract. Such a contraction is however counteracted by the already congealed outer layer, and as a result the outer layer absorbs these tensions through a change of sign of the tensions of the outer layer, i.e. the earlier tension stress transforms into pressure stress.

The device according to the invention makes possible that the casting on an early stage can be transported from the casting space and that it can be optimally adaptably cooled outside the casting machine for example during a long period of time without burdening the casting machine.

For one embodiment according to the invention, the device is completely separated from the casting machine in such a way that the device is allowed to carry out the thermal treatment without the object formed having contact with the casting machine. Consequently, the casting machine is freed for a new casting operation. In the same time as a formed object (14, 20) is treated thermally by the treatment device, a new object (14, 20) is formed in the forming tool (10, 11). From this follows that a parallel process is achieved, i.e. the forming and the cooling of the objects are carried out at the same time, which reduces the cycle time for a casting operation.

In another embodiment of the invention, the treatment tool 1 comprises two parts, both of which having a treatment surface which in its form at least partially imitates both parts of the forming tool (10, 11). When both parts of the treatment tool are put together, they constitute an inner space which imitates the casting space in the forming tool. One part of the treatment tool is mounted on a robot, in the same way as in the previous embodiment example, and the second part is fixedly mounted outside the casting machine. When the robot has fetched the object, it is docked with a fixed part of the treatment tool, wherein the whole object is enclosed by the treatment tool. In such a way, the whole object can be heated or cooled.

In another embodiment of the invention, the treatment tool comprises several parts, the shapes of which imitate the forming tool. Hence, it is possible to cool a number of objects, which are formed by the casting machine, in the same time as the casting machine is free to form new objects.

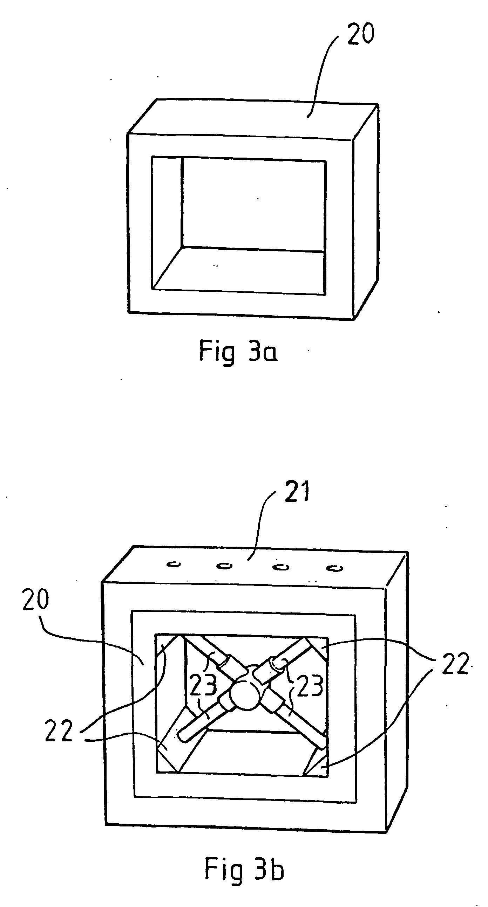

When an object 14 is cooled in the treatment member, a certain shrinkage can take place. In order to fix and secure the dimensional accuracy for certain sections of the object, the treatment member 1 may be equipped with movable parts which can be shifted towards the object. For objects with a notch, for example having a round hole, the shape of which is important to secure, a pipe-like member with exact outer measures, can be moved into the hole during the cooling and be withdrawn when the correct temperature has been reached in order to secure the shape of the object. Figure 3a shows an object 20 having a rectangular shape with a rectangular hole extending through it. For this object, it is important that the dimensions of the corners of the hole are exact, thus obtaining right angles. Figure 3b shows a treatment tool 21 arranged to cool the object 20. The treatment tool comprises four right-angled blocks 22 attached on an outslideable and inslideable arm 23 each. When the treatment tool is empty, the blocks 22 are slid in and when the object is in place in the treatment tool, the blocks are slid out to a predetermined position and remain in that position until the object 20 has been cooled.

The invention also relates to a machine for casting objects 14, 20, which casting machine comprises a divisible forming tool with a casting space 40 enclosed therein intended to be filled with a liquid casting material, wherein the casting machine comprises a separate device for thermal treatment according to the above.

The invention is not limited to the shown embodiments.

For example, the thermal treatment may comprise cooling as well as heating, and, of course, the handling member may receive the object from either the movable or the fixed part of the forming tool.

## Claims

1. A device for thermal treatment at a casting process, wherein objects (14, 20) are formed in a casting machine (50), which comprises a divisible forming tool (10, 11) with a casting space (40) enclosed therein designed to be filled by a liquid casting material (30), the device comprises:
- a treatment tool (1, 21) for thermally treating the objects, comprising at least one treatment surface (3) arranged to, in its form, at least partially imitate the casting space (40), and
- a handling member (12) for transporting the objects (14, 20) to a position outside the casting machine (50),
**characterized in that** the treatment tool (1, 21) comprises means (7) for connecting an object (14, 20) formed in the casting space (40) to the treatment tool (1, 21), and that the handling member (12) is arranged to transport the treatment tool with the object (14, 20) away from the divisible forming tool (10, 11) to a position outside the casting machine (50), and thereby enabling use of said divisible forming tool for casting a new object at the same time as the formed object is treated thermally by the treatment tool.

2. A device according to claim 1, **characterized in that** the treatment tool (1, 21) is exchangeably connected with the handling member (12).

3. A device according to claim 1 or 2, **characterized in that** the handling member (12) comprises a movable arm (13), which is arranged to achieve the movement during the transportation.

4. A device according to any of the preceding claims, **characterized in that** the connecting means (7) is arranged to connect the object (14, 20) to the treatment tool (1, 21) by underpressure.

5. A device according to any of the preceding claims, **characterized in that** the treatment tool (1, 21) comprises means arranged on the treatment surface (3) in order to adapt for changes in shape of the object (14, 20) in connection to the thermal treatment.

6. A device according to any of the preceding claims, **characterized in that** the treatment tool (1, 21) comprises means (22, 23) to fix at least some parts of the object (14, 20) during the thermal treatment.

7. A device according to any of the preceding claims, **characterized in that** it comprises a number of treatment surfaces (3) arranged so that several objects (14, 20) can be treated at the same time.

8. A device according to any of the preceding claims, **characterized in that** the treatment tool (1, 21) comprises a thermally conducting material, in which thermal transport takes place.

9. A device according to any of the preceding claims, **characterized in that** the treatment tool (1, 21) comprises one or several channels (6) arranged to conduct a medium with the purpose to add or remove energy of heat.

10. A device according to claim 9, **characterized in that** the treatment tool (1, 21) comprises a number of channels (6) arranged to conduct mediums with different temperatures between them.

11. A device according to any of the preceding claims, **characterized in that** the device is arranged to cool the object (14, 20).

12. A device according to any of the preceding claims, **characterized in that** the device is arranged to heat the object (14, 20).

13. A device according to any of the preceding claims, **characterized in that** an injection-moulding machine defines said casting machine (50), and that the casting material is constituted by plastic materials.

14. A method for thermal treatment at a casting process, wherein the method comprises:
- feeding a liquid casting material (30) into a divisible forming tool (10, 11) comprising a casting space (40),
- holding the casting material in the casting space (40) until at least the outer layer of the formed object (14, 20) is form-stable,
- opening the divisible forming tool,
- connecting a treatment tool (1, 21) adapted for thermal treatment of the object, comprising at least one treatment surface which in its form at least partially imitates the casting space (40) of the divisible forming tool, to the object (14, 20) formed in the casting space (40), in order to pull the object out of the casting space
- fetching the object (14, 20) from the divisible forming tool (10, 11),
- transporting the treatment tool with the object away from the divisible forming tool to a position outside the casting machine, and
- thermally treating the object by the treatment tool, outside the casting machine at the same time as a new amount of liquid casting material is fed into the casting space (40) of the divisible forming tool for formation of a new object.

15. A method according to claim 14, **characterized in that** when at least the outer layer of the object (14, 20) is form-stable, the forming tool is opened and the treatment tool (1, 21) is applied against the object (14, 20) so that it fits against the treatment surface (3), and the object (14, 20) is connected to the treatment tool (1, 21) with the connecting means (7), whereafter the treatment tool (1, 21) is removed from the forming tool (10, 11).

16. A method according to claim 15, **characterized in that** the object (14, 20) is connected to the treatment tool (1, 21) by underpressure.

17. A method according to any of the claims 14 to 16, **characterized in that** the object (14, 20) is cooled until the object (14, 20) reaches the intended temperature.

18. A method according to any of the claims 14 to 17, **characterized in that** the object (14, 20) is heated until the object (14, 20) reaches the intended temperature.

19. A method according to any of the claims 14-18, **characterized in that** the casting process is constituted by an injection-moulding process, wherein objects (14, 20) with form-stable outer layers are produced by introducing liquid plastic material (30) into the casting space.

20. A method according to any of the claims 14-19, **characterized in that** a number of objects (14, 20) formed in the casting space are cooled in a number of treatment tools (1, 21) simultaneously as new objects (14, 20) are formed successively in the forming tool (10, 11).

## Patentansprüche

1. Vorrichtung zur Wärmebehandlung bei einem Gießverfahren, wobei Gegenstände (14, 20) in einer Gießmaschine (50) geformt werden, die ein teilbares Formgebungswerkzeug (10, 11) mit einem davon umschlossenen Gießraum (40) umfasst, der so ausgebildet ist, dass er mit einem flüssigen Gießmaterial (30) befüllbar ist, wobei die Vorrichtung umfasst:
- ein Bchandlungswerkzeug (1, 21) zur thermischen Behandlung der Gegenstände, umfassend zumindest eine Behandlungsoberfläche (3), die in ihrer Form so angeordnet ist, dass sie zumindest teilweise den Gießraum (40) nachbildet, und
- ein Handhabungselement (12) zum Transport der Gegenstände (14, 20) zu einer Position außerhalb der Gießmaschine (50),
**dadurch gekennzeichnet, dass** das Behandlungswerkzeug (1, 21) Mittel (7) zur Verbindung eines in dem Gießraum (40) geformten Gegenstandes (14, 20) mit dem Behandlungswerkzeug (1, 21) umfasst, und dass das Handhabungselement (12) angeordnet ist, um das Behandlungswerkzeug mit dem Gegenstand (14, 20) von dem teilbaren Formgebungswerkzeug (10, 11) zu einer Position außerhalb der Gießmaschine (50) zu transportieren und dabei die Verwendung des teilbaren Formgebungswerkzeuges zum Giessen eines neuen Gegenstandes zur selben Zeit zu ermöglichen, zu der der geformte Gegenstand durch das Behandlungswerkzeug thermisch behandelt wird.

2. Vorrichtung nach Anspruch 1, **dadurch gekennzeichnet, dass** das Behandlungswerkzeug (1, 21) austauschbar mit dem Handhabungselement (12) verbunden ist.

3. Vorrichtung nach Anspruch 1 oder 2, **dadurch gekennzeichnet, dass** das Handhabungselement (12) einen beweglichen Arm (13) umfasst, der so angeordnet ist, dass er die Bewegung während des Transports ausführt.

4. Vorrichtung nach einem der vorstehenden Ansprüche, **dadurch gekennzeichnet, dass** die Verbindungsmittel (7) so angeordnet sind, dass sie den Gegenstand (14, 20) mit dem Behandlungswerkzeug (1, 21) durch Unterdruck verbinden.

5. Vorrichtung nach einem der vorstehenden Ansprüche, **dadurch gekennzeichnet, dass** das Behandlungswerkzeug (1, 21) Mittel umfasst, die auf der Behandlungsoberfläche (3) angeordnet sind, um sich Veränderungen in der Form des Gegenstandes (14, 20) in Verbindung mit der thermischen Behandlung anzupassen.

6. Vorrichtung nach einem der vorstehenden Ansprüche, **dadurch gekennzeichnet, dass** das Behandlungswerkzeug (1, 21) Mittel (22, 23) umfasst, um zumindest einige Bestandteile des Gegenstandes (14, 20) während der thermischen Behandlung zu fixieren.

7. Vorrichtung nach einem der vorstehenden Ansprüche, **dadurch gekennzeichnet, dass** sie eine Mehrzahl von Behandlungsoberflächen (3) umfasst, die so angeordnet sind, dass verschiedene Gegenstände (14, 20) gleichzeitig behandelt werden können.

8. Vorrichtung nach einem der vorstehenden Ansprüche, **dadurch gekennzeichnet, dass** das Behandlungswerkzeug (1, 21) ein thermisch leitfähiges Material umfasst, in dem ein thermischer Transport stattfindet.

9. Vorrichtung nach einem der vorstehenden Ansprüche, **dadurch gekennzeichnet, dass** das Behandlungswerkzeug (1, 21) einen oder mehrere Kanäle (6) umfasst, die angeordnet sind, um ein Medium mit dem Zweck, Wärmeenergie zu- oder abzuführen, zu leiten.

10. Vorrichtung nach Anspruch 9, **dadurch gekennzeichnet, dass** das Behandlungswerkzeug (1, 21) eine Mehrzahl von Kanälen (6) umfasst, die angeordnet sind, um Medien mit unterschiedlichen Temperaturen zwischen sich zu leiten.

11. Vorrichtung nach einem der vorstehenden Ansprüche, **dadurch gekennzeichnet, dass** die Vorrichtung angeordnet ist, um den Gegenstand (14, 20) zu kühlen.

12. Vorrichtung nach einem der vorstehenden Ansprüche, **dadurch gekennzeichnet, dass** die Vorrichtung angeordnet ist, um den Gegenstand (14,20) aufzuheizen.

13. Vorrichtung nach einem der vorstehenden Ansprüche, **dadurch gekennzeichnet, dass** die Gießmaschine (50) als Spritzgussmaschine definiert ist, und dass das Gießmaterial durch Plastikmaterialien gebildet wird.

14. Verfahren zur Wärmebehandlung bei einem Gießverfahren, wobei das Verfahren umfasst:
- Zuführen eines flüssigen Gießmaterials (30) in ein teilbares Formgebungswerkzeug (10, 11), das einen Gießraum (40) aufweist,
- Halten des Gießmaterials in dem Gießraum (40) bis zumindest die äußere Schicht des geformten Gegenstandes (14, 20) formstabil ist,
- Öffnen des teilbaren Formgebungswerkzeuges,
- Verbinden eines für die thermische Behandlung des Gegenstandes angepassten Behandlungswerkzeuges (1, 21), das mindestens eine Behandlungsoberfläche umfasst, die in ihrer Form zumindest teilweise den Gießraum (40) des teilbaren Formgebungswerkzeuges nachbildet, mit dem in dem Gießraum (40) geformten Gegenstand (14, 20), um den Gegenstand aus dem GieBraum herauszuziehen,
- Herausholen des Gegenstandes (14, 20) aus dem teilbaren Formgebungswerkzeug (10, 11),
- Transportieren des Behandlungswerkzeuges mit dem Gegenstand weg von dem teilbaren Formgebungswerkzeug zu einer Position außerhalb der Gießmaschine, und
- Thermisches Behandeln des Gegenstandes durch das Behandlungswcrkzeug außerhalb der Gießmaschine zur gleichen Zeit, zu der eine neue Menge an flüssigem Gießmaterial in den Gießraum (40) des teilbaren Formgebungswerkzeuges zur Bildung eines neuen Gegenstandes eingeführt wird.

15. Verfahren nach Anspruch 14, **dadurch gekennzeichnet, dass**, wenn mindestens die äußere Schicht des Gegenstandes (14, 20) formstabil ist, das Formgebungswerkzeug geöffnet und das Behandlungswerkzeug (1, 21) an den Gegenstand angesetzt wird, so dass es an der Behandlungsoberfläche (3) anliegt, und der Gegenstand (14, 20) mittels der Verbindungsmittel (7) mit dem Behandlungswerkzeug (1, 21) verbunden wird, wonach das Behandlungswerkzeug (1, 21) von dem Formgebungswerkzeug (10, 11) entfernt wird.

16. Verfahren nach Anspruch 15, **dadurch gekennzeichnet, dass** der Gegenstand (14, 20) durch Unterdruck mit dem Behandlungswerkzeug (1, 21) verbunden wird.

17. Verfahren nach einem der Ansprüche 14 bis 16, **dadurch gekennzeichnet, dass** der Gegenstand (14, 20) gekühlt wird, bis der Gegenstand (14, 20) die bestimmungsgemäße Temperatur erreicht.

18. Verfahren nach einem der Ansprüche 14 bis 17, **dadurch gekennzeichnet, dass** der Gegenstand (14, 20) aufgeheizt wird, bis der Gegenstand (14, 20) die bestimmungsgemäße Temperatur erreicht.

19. Verfahren nach einem der Ansprüche 14 bis 18, **dadurch gekennzeichnet, dass** das Gießverfahren durch ein Spritzgießverfahren gebildet wird, bei dem Gegenstände (14, 20) mit formstabilen äußeren Schichten durch Einführen von flüssigem Plastikmaterial (30) in den Gießraum gebildet werden.

20. Verfahren nach einem der Ansprüche 14 bis 19, **dadurch gekennzeichnet, dass** eine Mehrzahl von in dem Gießraum geformten Gegenständen (14, 20) in einer Mehrzahl von Behandlungswerkzeugen (1, 21) gekühlt werden, während gleichzeitig neue Gegenstände (14, 20) aufeinanderfolgend in dem Formgebungswerkzeug (10, 11) geformt werden.

## Revendications

1. Dispositif de traitement thermique au cours d'un procédé de coulée, dans lequel des objets (14, 20) sont formés dans une machine de coulée (50), qui comprend un outil de formage divisible (10, 11), un espace de coulée (40) étant inclus dans celle-ci et conçu pour être rempli d'un matériau de coulée liquide (30), le dispositif comprenant :
- un outil de traitement (1, 21) permettant de traiter thermiquement les objets, comprenant au moins une surface de traitement (3) agencée pour, sous sa forme, au moins imiter partiellement l'espace de coulée (40), et
- un élément de manutention (12) permettant de transporter les objets (14, 20) jusqu'à une position située à l'extérieur de la machine de coulée (50) ;
**caractérisé en ce que** l'outil de traitement (1, 21) comprend un moyen (7) permettant de raccorder un objet (14, 20) formé dans l'espace de coulée (40) à l'outil de traitement (1, 21) et **en ce que** l'élément de manutention (12) est agencé pour transporter l'outil de traitement, l'objet (14, 20) étant éloigné de l'outil de formage divisible (10, 11) jusqu'à une position située à l'extérieur de la machine de coulée (50), et permettant ainsi l'utilisation dudit l'outil de formage divisible (10, 11) pour couler un nouvel objet en même temps que l'objet formé est traité thermiquement par l'outil de traitement.

2. Dispositif selon la revendication 1, **caractérisé en ce que** l'outil de traitement (1, 21) est raccordé, de manière interchangeable, à l'élément de manutention (12).

3. Dispositif selon la revendication 1 ou 2, **caractérisé en ce que** l'élément de manutention (12) comprend un bras mobile (13) qui est agencé pour réaliser le mouvement au cours du transport.

4. Dispositif selon l'une quelconque des revendications précédentes, **caractérisé en ce que** le moyen de raccordement (7) est agencé pour raccorder l'objet (14, 20) à l'outil de traitement (1, 21) par sous-pression.

5. Dispositif selon l'une quelconque des revendications précédentes, **caractérisé en ce que** l'outil de traitement (1, 21) comprend un moyen agencé sur la surface de traitement (3) afin de s'adapter aux changements de forme de l'objet (14, 20) en liaison avec le traitement thermique.

6. Dispositif selon l'une quelconque des revendications précédentes, **caractérisé en ce que** l'outil de traitement (1, 21) comprend un moyen (22, 23) permettant de fixer au moins certaines parties de l'objet (14, 20) au cours du traitement thermique.

7. Dispositif selon l'une quelconque des revendications précédentes, **caractérisé en ce qu'**il comprend un certain nombre de surfaces de traitement (3) agencées de telle sorte que plusieurs objets (14, 20) peuvent être traités en même temps.

8. Dispositif selon l'une quelconque des revendications précédentes, **caractérisé en ce que** l'outil de traitement (1, 21) comprend un matériau conducteur thermiquement, dans lequel le transport thermique a lieu.

9. Dispositif selon l'une quelconque des revendications précédentes, **caractérisé en ce que** l'outil de traitement (1, 21) comprend un canal ou plusieurs canaux (6) agencé(s) pour conduire un milieu dans le but d'ajouter ou d'enlever l'énergie de la chaleur.

10. Dispositif selon l'une quelconque des revendications précédentes, **caractérisé en ce que** l'outil de traitement (1, 21) comprend un certain nombre de canaux (6) agencés pour conduire des milieux ayant des températures différentes entre eux.

11. Dispositif selon l'une quelconque des revendications précédentes, **caractérisé en ce que** le dispositif est agencé pour refroidir l'objet (14, 20).

12. Dispositif selon l'une quelconque des revendications précédentes, **caractérisé en ce que** le dispositif est agencé pour chauffer l'objet (14, 20).

13. Dispositif selon l'une quelconque des revendications précédentes, **caractérisé en ce qu'**une machine de moulage par injection définit ladite machine de coulée (50) et **en ce que** le matériau de coulée est constitué de matières plastiques.

14. Procédé de traitement thermique au niveau d'un procédé de coulée, dans lequel le procédé comprend :
- la fourniture d'un matériau de coulée liquide (30) dans un outil de formage divisible (10, 11) comprenant un espace de coulée (40),
- le maintien du matériau de coulée dans l'espace de coulée (40) jusqu'à ce que, au moins la couche extérieure de l'objet formé (14, 20) soit stable, sur le plan de la forme,
- l'ouverture de l'outil de formage divisible,
- le raccordement d'un outil de traitement (1, 21) conçu pour le traitement thermique de l'objet, comprenant au moins une surface de traitement qui, dans sa forme, imite au moins partiellement l'espace de coulée (40) de l'outil de formage divisible, à l'objet (14, 20) formé dans l'espace de coulée (40), afin de tirer l'objet hors de l'espace de coulée,
- la récupération de l'objet (14, 20) dans l'outil de formage divisible (10, 11),
- le transport de l'outil de traitement, l'objet étant éloigné de l'outil de formage divisible, jusqu'à une position située à l'extérieur de la machine de coulée, et
- le traitement thermique de l'objet par l'outil de traitement, à l'extérieur de la machine de coulée, en même temps qu'une nouvelle quantité de matériau de coulée liquide est fournie dans l'espace de coulée (40) de l'outil de formage divisible, pour le formage d'un nouvel objet.

15. Procédé selon la revendication 14, **caractérisé en ce que**, lorsque au moins la couche extérieure de l'objet (14, 20) est stable, sur le plan de la forme, l'outil de formage est ouvert et l'outil de traitement (1, 21) est appliqué contre l'objet (14, 20), de telle sorte qu'il s'ajuste contre la surface de traitement (3), et que l'objet (14, 20) est raccordé à l'outil de traitement (1, 21) par l'intermédiaire du moyen de raccordement (7), après quoi l'outil de traitement (1, 21) est retiré de l'outil de formage (10, 11).

16. Procédé selon la revendication 15, **caractérisé en ce que** l'objet (14, 20) est raccordé à l'outil de traitement (1, 21) par sous-pression.

17. Procédé selon l'une quelconque des revendications 14 à 16, **caractérisé en ce que** l'objet (14, 20) est refroidi jusqu'à ce que l'objet (14, 20) atteigne la température prévue.

18. Procédé selon l'une quelconque des revendications 14 à 17, **caractérisé en ce que** l'objet (14, 20) est chauffé jusqu'à ce que l'objet (14, 20) atteigne la température prévue.

19. Procédé selon l'une quelconque des revendications 14 à 18, **caractérisé en ce que** le procédé de coulée est constitué d'un procédé de moulage par injection, dans lequel des objets (14, 20) ayant des couches extérieures stables, sur le plan de la forme, sont produits en introduisant du matériau plastique liquide (30) dans l'espace de coulée.

20. Procédé selon l'une quelconque des revendications 14 à 19, **caractérisé en ce qu'**un certain nombre d'objets (14, 20) formés dans l'espace de coulée sont refroidis dans un certain nombre d'outils de traitement (1, 21) simultanément au moment où de nouveaux objets (14, 20) sont formés successivement dans l'outil de formage (10, 11).
